# EUROPEAN PATENT APPLICATION

(11) **EP 3 915 698 A1**
(43) Date of publication of application: **01.12.2021**
(21) Application number: 21173555.0
(22) Date of filing: 12.05.2021
(51) Int. Cl.: B22F 1/00, B22F 10/14, B28B 1/00, B33Y 10/00, B33Y 40/20, B33Y 80/00, C04B 35/01, B29C 64/165

(54) **BINDER SOLUTIONS COMPRISING NANOPARTICLES FOR USE IN ADDITIVE MANUFACTURING**

(30) Priority: 26.05.2020 US 202063029954 P
(71) Applicant: General Electric Company, Schenectady, NY 12345 (US)
(72) Inventor: ARUNKUMAR, NATARAJAN, Cincinnati, 45215 (US); ALBERTS, WILLIAM C., Cincinnati, 45215 (US); BROMBERG, VADIM, Cincinnati, 45215 (US); CHAN, KWOK PONG, Cincinnati, 45215 (US)
(74) Representative: Hafner & Kohl PartmbB

(57) **Abstract**

A binder solution (36) comprises greater than or equal to 0.5 wt% and less than or equal to 20 wt% of nanoparticles (36a), a thermoplastic binder (36b), and a solvent. The nanoparticles (36a) may comprise metallic nanoparticles comprising nickel, silver, chromium, aluminum, cobalt, iron, or combinations thereof. The nanoparticles (36a) may comprise ceramic nanoparticles, the comprising alumina, aluminum nitride, zirconia, titania, silica, silicon nitride, silicon carbide, boron nitride, or combinations thereof. A method (10) of manufacturing a part includes depositing a layer (22) of particulate material (24) on a working surface (32), selectively applying a binder solution (36) into the layer (22) of particulate material (24) in a pattern representative of a layer of the part, repeating the steps of depositing and selectively applying to form a plurality of layers (22) of particulate material (24) with the applied binder solution (36), and curing the applied binder solution (36) in the plurality of layers (22) of particulate material (24) with the applied binder solution (36) to evaporate the solvent and thereby form a green body part (60).

## Description

### Cross-Reference to Related Applications

The present specification claims the benefit of U.S. Provisional Application Serial No. 63/029,954 filed May 26, 2020 and entitled "Binder Solutions Comprising Nanoparticles For Use In Additive Manufacturing," the entirety of which is incorporated by reference herein.

### Field

The present specification relates to additive manufacturing. More specifically, the present specification is directed to binder solutions comprising nanoparticles for use in additive manufacturing.

### Technical Background

Additive manufacturing, also known as 3D printing, is a process in which material is built up layer-by-layer to form an object. Binder jetting is an additive manufacturing technique based on the use of a binder to join particles of a powder to form a three-dimensional object. In particular, the binder is jetted onto successive layers of the powder in a build volume, where layers of the powder and the binder adhere to one another to form a three-dimensional object. In some applications, the printed part is suitable for end-use.

In other applications, subsequent processing, such as removal of the binder and sintering of the powder, may be needed to transform the printed three-dimensional part into a finished part. Accordingly, it is desirable for the printed part to have a suitable green strength for handling (e.g., transferring, inspecting, depowdering) and suitable brown strength for minimizing distortion during the debinding/sintering processes. However, binder solutions previously available for binder jet 3D printing do not provide the brown strength necessary to prevent distortion and damage to the printed part during the post-printing processes.

Accordingly, a need exists for alternative binder solutions that maintain green strength and provide improved brown strength to the printed part during post-printing processes.

### SUMMARY

Various embodiments of binder solutions disclosed herein meet these needs by including nanoparticles that fill the voids and provide contact and bridging between the particles of the powder layer prior to sintering of the particulate material, thereby improving the brown strength and overall stiffness of the printed part. Increasing the density of the article decreases the shrinkage and increases the strength of the printed part, which reduces cracking and distortion.

According to a first aspect A1, a binder solution may include: greater than or equal to 0.5 wt% and less than or equal to 20 wt% of nanoparticles, based on a total weight of the binder solution; a thermoplastic binder comprising a first polymer strand, wherein the first polymer strand has an average molecular weight greater than or equal to 7,000 g/mol and less than or equal to 50,000 g/mol; and a solvent.

A second aspect A2 includes the binder solution according to the first aspect A1, wherein the binder solution comprises greater than or equal to 1 wt% and less than or equal to 10 wt% of the nanoparticles, based on a total weight of the binder solution.

A third aspect A3 includes the binder solution according to the first aspect A1 or the second aspect A2, wherein the nanoparticles comprise metallic nanoparticles

A fourth aspect A4 includes the binder solution according to the third aspect A3, wherein the metallic nanoparticles comprise nickel, silver, chromium, aluminum, cobalt, iron, or a combination thereof.

A fifth aspect A5 includes the binder solution according the first aspect A1 or the second aspect A2, wherein the nanoparticles comprise ceramic nanoparticles.

A sixth aspect A6 includes the binder solution according to the fifth aspect A5, wherein the ceramic nanoparticles comprise alumina, aluminum nitride, zirconia, titania, silica, silicon nitride, silicon carbide, boron nitride, or combinations thereof.

A seventh aspect A7 includes the binder solution according to any of the first through sixth aspects A1-A6, wherein the first polymer strand is selected from the group consisting of polyvinyl alcohol (PVA), polyacryl amide (PAAm), polyacrylic acid (PAA), polyvinyl pyrrolidone (PVP), polymethyl methacrylate (PMMA), polyvinyl methyl ether-maleic anhydride (PVME-MA), polystyrene (PS), derivatives thereof, and combinations thereof.

An eighth aspect A8 includes the binder solution according any of the first through seventh aspects A1-A7, wherein the thermoplastic binder further comprises a second polymer strand, wherein the first polymer strand comprises a first functional group and the second polymer strand comprises a second functional group different from the first functional group, wherein the first and second functional groups are configured to non-covalently couple the first polymer strand with the second polymer strand, and wherein the second polymer strand has an average molecular weight greater than or equal to 100 g/mol and less than or equal to 10,000 g/mol.

A ninth aspect A9 includes the binder solution according to the eighth aspect A8, wherein the second polymer strand is selected from the group consisting of polyacrylic acid (PAA), poly methacrylic acid (PmAA), polyacrylamide (PAAm), derivatives thereof, and combinations thereof.

A tenth aspect A10 includes the binder solution according to any of the first through ninth aspects A1-A9, wherein a viscosity of the binder solution is greater than or equal to 1 cP and less than or equal to 40 cP.

According to an eleventh aspect A11, a method of manufacturing a part may include: depositing a layer of particulate material on a working surface; selectively applying a binder solution into the layer of particulate material in a pattern representative of a layer of the part, the binder solution comprising: greater than or equal to 0.5 wt% and less than or equal to 20 wt% of nanoparticles, based on a total weight of the binder solution; a thermoplastic binder comprising a first polymer strand, wherein the first polymer strand has an average molecular weight greater than or equal to 7,000 g/mol and less than or equal to 50,000 g/mol; and a solvent; repeating the steps of depositing and selectively applying to form a plurality of layers of particulate material with the applied binder solution; and curing the applied binder solution in the plurality of layers of particulate material with the applied binder solution to evaporate the solvent and thereby form a green body part.

A twelfth aspect A12 includes the method according to the eleventh aspect A11, wherein curing the applied binder solution comprises heating the plurality of layers of particulate material with the applied binder solution at a temperature greater than or equal to 25 °C and less than or equal to 100 °C.

A thirteenth aspect A13 includes the method according to the eleventh aspect A11 or the twelfth aspect A12, wherein the nanoparticles comprise metallic nanoparticles, the metallic nanoparticles comprising nickel, silver, chromium, aluminum, cobalt, iron, or a combination thereof, and wherein the particulate material comprises a metal particulate material, the metal particulate material comprising a nickel alloy, a cobalt alloy, a cobalt-chromium alloy, a titanium alloy, an aluminum-based alloy, a tungsten alloy, a stainless steel alloy, or a combination thereof.

A fourteenth aspect A14 includes the method according to the thirteenth aspect A13, wherein the method further comprises: heating the green body part above a first temperature in an oxygen-free environment to remove at least a portion of the thermoplastic binder and sinter at least a portion of the metallic nanoparticles such that the sintered metallic nanoparticles form necked regions of a nanoparticulate material between the particulate material thereby forming a brown body part; and heating the brown body part above a second temperature to sinter the particulate material thereby forming a consolidated part.

A fifteenth aspect A15 includes the method according to the eleventh aspect A11 or the twelfth aspect A12, wherein the nanoparticles comprise ceramic nanoparticles, the ceramic nanoparticles comprising alumina, aluminum nitride, zirconia, titania, silica, silicon nitride, silicon carbide, boron nitride, or combinations thereof, and wherein the particulate material comprises a ceramic particulate material, the ceramic particulate material comprising alumina, aluminum nitride, zirconia, titania, silica, silicon nitride, silicon carbide, boron nitride, or a combination thereof.

A sixteenth aspect A16 includes the method according to any of the eleventh through fifteenth aspects A11-A15, wherein a viscosity of the binder solution is greater than or equal to 1 cP and less than or equal to 40cP.

According to a seventeenth aspect A17, a green body part may include: a plurality of layers of particulate material; greater than or equal to 0.5 wt% and less than or equal to 6 wt% of nanoparticles; and greater than or equal to 1 wt% and less than or equal to 20 wt% a thermoplastic binder comprising a first polymer strand, wherein the first polymer strand has an average molecular weight greater than or equal to 7,000 g/mol and less than or equal to 50,000 g/mol, wherein the thermoplastic binder bonds the particulate material of the plurality of layers, and wherein the green body part comprises a three-point flexural strength greater than or equal to 7 MPa as measured in accordance with ASTM B312-14.

An eighteenth aspect A18 includes the green body part according to the seventeenth aspect A17, wherein the nanoparticles comprise metallic nanoparticles, the metallic nanoparticles comprising nickel, silver, chromium, aluminum, cobalt, iron, or a combination thereof, and wherein the particulate material comprises a metal particulate material, the metal particulate material comprising a nickel alloy, a cobalt alloy, a cobalt-chromium alloy, a titanium alloy, an aluminum-based alloy, a tungsten alloy, a stainless steel alloy, or a combination thereof.

A nineteenth aspect A19 includes the green body part according to the seventeenth aspect A17, wherein the nanoparticles comprise ceramic nanoparticles, the ceramic nanoparticles comprising alumina, aluminum nitride, zirconia, titania, silica, silicon nitride, silicon carbide, boron nitride, or combinations thereof, and wherein the particulate material comprises a ceramic particulate material, the ceramic particulate material comprising alumina, aluminum nitride, zirconia, titania, silica, silicon nitride, silicon carbide, boron nitride, or a combination thereof.

A twentieth aspect A20 includes the green body part according to any of the seventeenth through nineteenth aspects A17-A19, wherein the first polymer strand is selected from the group consisting of polyvinyl alcohol (PVA), polyacryl amide (PAAm), polyacrylic acid (PAA), polyvinyl pyrrolidone (PVP), polymethyl methacrylate (PMMA), polyvinyl methyl ether-maleic anhydride (PVME-MA), polystyrene (PS), derivative thereof, and combinations thereof.

Additional features and advantages of the embodiments disclosed herein will be set forth in the detailed description, which follows, and in part will be readily apparent to those skilled in the art from that description or recognized by practicing the disclosed embodiments as described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 is a plot showing temperature vs. strength curves of a part formed using a conventional binder solution and a part formed using an example binder solution comprising nanoparticles according to one or more embodiments described herein;
FIG. 2 is a flow diagram of an embodiment of a method of manufacturing a consolidated part via an additive manufacturing process using a binder solution comprising nanoparticles according to one or more embodiments described herein;
FIG. 3 is a block diagram of an embodiment of an additive manufacturing apparatus used to manufacture the consolidated part in accordance with the method of FIG. 2;
FIG. 4 is a schematic diagram of an embodiment of a layer of particulate material from which the consolidated part is manufactured resulting from the acts of the method of FIG. 2;
FIG. 5 is a schematic view of the particulate material after deposition of the binder solution in accordance with the method of FIG. 2;
FIG. 6 is a schematic view of the particulate material after debinding in accordance with the method of FIG. 2;
FIG. 7 is a schematic view of the particulate material after sintering in accordance with the method of FIG. 2;
FIG. 8 is a photograph of samples formed using a comparative binder solution in accordance with the method of FIG. 2;
FIG. 9 is a photograph of the samples of FIG. 8 after debinding in accordance with the method of FIG. 2;
FIG. 10 is a photograph of samples formed using an example binder solution comprising metallic nanoparticles according to one or more embodiments described herein in accordance with the method of FIG. 2;
FIG. 11 is a photograph of the samples of FIG. 10 after debinding in accordance with the method of FIG. 2;
FIG. 12 is a photograph of samples formed from a comparative binder solution and an example binder solution comprising metallic nanoparticles according to one or more embodiments described herein in accordance with the method of FIG. 2; and
FIG. 13 is a photograph of the samples of FIG. 12 after sintering in accordance with the method of FIG. 2.

### DETAILED DESCRIPTION

Reference will now be made in detail to various embodiments of nanoparticle-containing binder solutions for use in additive manufacturing.

In particular, various embodiments of nanoparticle-containing binder solutions comprise greater than or equal to 0.5 wt% and less than or equal to 20 wt% of nanoparticles; a thermoplastic binder; and a solvent. Various embodiments of binder solutions comprising nanoparticles and use of such binder solutions in additive manufacturing will be referred to herein with specific reference to the appended drawings.

Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation; and the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

The term "nanoparticle," as used herein, refers to a particle having a diameter greater than or equal to 1 nm and less than or equal to 100 nm.

The term "average diameter," as used herein, refers to the average diameter of all the nanoparticles included in the binder solution.

The phrase "sintering compaction temperature," as used herein, refers to the temperature at which localized melting starts to occur within the nanoparticles.

The phrase "thermoplastic binder," as used herein, refers to a binder that includes one or more polymer strands having functional groups that may interact with one another via weak non-covalent forces (e.g., interactions, bonds) to link, or otherwise couple, strands of each respective thermoplastic polymer to one another.

The phrase "weak non-covalent forces," as used herein, refers to hydrogen bonding, ionic bonding, Van der Waals forces, and the like having a bond or force strength greater than or equal to 1 kcal/mol and less than or equal to 7 kcal/mol.

The phrases "standard temperature and pressure" and "STP," as used herein refer to a temperature of 0 °C and pressure of 101.325 kPa.

The phrase "X-based," as used herein (e.g., "nickel-based"), means that X element makes up the highest weight percentage of the composition relative to other constituents of the composition.

The term "jettability," as used herein, refers to the ability of a binder solution to be jetted, such as from a printhead. A binder solution may be considered to be "jettable" when all the polymers and other organic additives are solubilized and nanoparticles are evenly suspended without agglomeration in the binder solution and the binder solution has a viscosity of 1-40 centipoise (cP).

The parameter "viscosity" of the binder solution, as discussed herein, is measured using a rheometer in accordance with ASTM E3116.

The term "debinding," as used herein, refers to heating the green body part above a first temperature such that thermolysis of the thermoplastic binder into small oligomers occurs and at least a portion of the thermoplastic binder is removed, thereby forming a brown body part. During debinding, nanoparticle sintering may occur, which may form necked regions of a nanoparticulate material between the particles of the powder layer to impart higher strength to the brown body part.

The term "sintering," as used herein, refers to heating the brown body part above a second temperature to remove a remaining portion of the thermoplastic binder (e.g., oligomeric residue and thermolytic byproducts formed during debinding) and consolidate the particles of the powder layer thereby forming a consolidated part.

The term "necked region," as used herein, refers to local deformation of the nanoparticulate material between adjacent particles of the particulate material.

The phrase "green body part," as used herein, refers to a printed part that has not undergone heat treatment to remove the thermoplastic binder.

The phrase "brown body part," as used herein, refers to a printed part that has undergone a debind heat treatment to remove at least a portion of the thermoplastic binder by thermolytic decomposition and to potentially cause nanoparticle sintering to occur.

The parameters "green body strength" and "brown body strength" of the parts, as discussed herein, are measured using a three-point flexural strength test in accordance with ASTM B312-14.

In additive manufacturing processes including binder jetting, a binder solution is jetted from a printhead onto successive layers of a powder to join particles of a powder to form a printed three-dimensional part. As discussed hereinabove, in embodiments, subsequent processing (e.g., debinding and sintering) may be needed to transform the printed three-dimensional part into a consolidated part. Accordingly, it is desirable for the printed part to have a suitable green strength for handling (e.g., transferring, inspecting, depowdering) and suitable brown strength for minimizing distortion during the post-printing processes. This reduces the occurrence of warping or part failure prior to consolidation, thereby improving manufacturing throughput.

However, conventional binder solutions including thermoplastic binders typically do not provide the brown strength necessary to prevent distortion and damage to the printed part during the post-printing processes. Specifically, the strength of a green body part is provided by the binder solution along with some contribution from particle friction and mechanical interlocking of the particles. The strength provided by the binder solution is due to weak non-covalent forces formed between the thermoplastic polymer strands (e.g., as with polymeric binders). As the green body part is heated to remove the thermoplastic binder and form a brown body part (i.e., prior to the particles sintering together), the mechanical (i.e., the brown strength) of the printed part is dependent on interparticle friction and mechanical interlocking, which is limited in the relatively large, approximately spherical particles commonly used to form the powder layer (e.g., metal particles). The low brown strength may lead to warping or even mechanical failure of the part.

Accordingly, various embodiments of binder solutions described herein include nanoparticles that fill the voids between the particles of the powder layer and provide contact and bridging between the particles of the powder layer prior to sintering of the particulate material, thereby improving the brown strength and overall stiffness of the printed part. Moreover, increasing the density of the article decreases the shrinkage and increases the strength of the printed part, which reduces cracking and distortion.

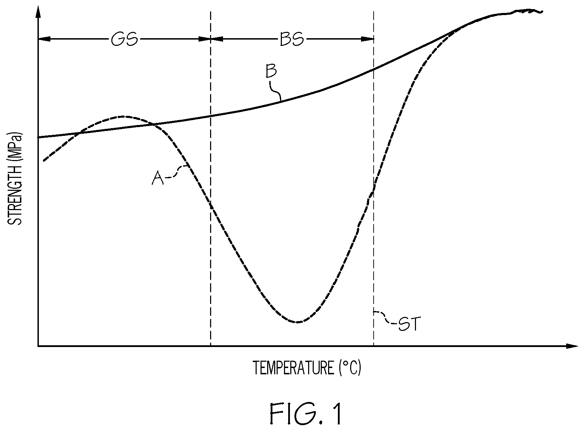

Referring now to FIG. 1, as shown by curve A, a part formed using a conventional binder solution including a thermoplastic binder exhibits insufficient brown strength BS after the green body part is heated to remove the thermoplastic binder and prior to sintering ST of the particulate material. In contrast, as shown by curve B, a part formed using a binder solution including nanoparticles in accordance with embodiments disclosed herein exhibits improved brown strength BS as the green strength GS decreases after the green body part is heated to remove the thermoplastic binder but prior to sintering ST the particulate material.

As set forth above, the binder solutions described herein comprise nanoparticles, a thermoplastic binder, and a solvent. The nanoparticles, when provided in a binder solution, enable low temperature sintering and provide strength to both the green body part and the brown body part. The strength provided by the nanoparticles allows for the formation of fine features in the consolidated part and/or the formation of large parts. For example, for a part including a cantilevered portion, such as an overhang, weak brown strength may lead to the cantilevered potion collapsing or cracking because the weight of the cantilevered portion is not sustained by interparticle friction that keeps the printed part together prior to sintering. However, nanoparticles may aid in promoting a rapid, surface-based mass transfer between particles, forming interparticle necked regions much more rapidly than would be expected for particulate materials without nanoparticle additions, even at the relatively low temperatures typically used for debinding. This provides strength to the part after all the thermoplastic binder is burned out by contacting and bridging the particulate material prior to sintering of the particulate material, thereby improving the strength and stiffness of the printed part overall.

In embodiments, the nanoparticles comprise metallic nanoparticles. In embodiments, the metallic nanoparticles comprise nickel (e.g., Ni-IJ70-30 (30 wt% Ni) (Applied Nanotech, Inc., Austin, Texas)), silver (e.g., MicroPE®PG-007-AP (60 wt% Ag) (Paru Technology, Suncheon-si, Jeollanam-do, Korea), chromium, aluminum, cobalt, iron, or combinations thereof. However, it should be understood that other metallic nanoparticles, such as titanium nanoparticles, copper nanoparticles, etc., are contemplated and possible. In embodiments, the metallic nanoparticle material depends on the particulate material. For example, nickel nanoparticles may be used with particulate material comprising stainless steel or nickel alloys.

In embodiments, the nanoparticles comprise ceramic nanoparticles. In embodiments, the ceramic nanoparticles comprise alumina, aluminum nitride, zirconia, titania, silica, silicon nitride, silicon carbide, boron nitride, or combinations thereof. However, it should be understood that other ceramic nanoparticles are contemplated and possible. In embodiments, the ceramic nanoparticle material depends on the particulate material. For example, alumina nanoparticles may be used with particulate material comprising alumina or aluminum nitride.

In embodiments, the nanoparticles have an average diameter greater than or equal to 5 nm and less than or equal to 100 nm. In embodiments, the nanoparticles may have an average diameter greater than or even equal to 1 nm or greater than or equal to 5 nm. In embodiments, the nanoparticles may have an average diameter less than or equal to 100 nm. For example, the nanoparticles may have an average diameter greater than or equal to 1 nm and less than or equal to 100 nm, greater than or equal to 5 nm and less than or equal to 100 nm, greater than or equal to 10 nm and less than or equal to 100 nm, greater than or equal to 15 nm and less than or equal to 100 nm, or even greater than or equal to 20 nm and less than or equal to 100 nm, or any and all sub-ranges formed from any of these endpoints.

In embodiments, the nanoparticles have a sintering compaction temperature greater than or equal to 300 °C and less than or equal to 600 °C. In embodiments, the nanoparticles may have a sintering compaction temperature less than or equal to 600 °C, less than or equal to 550 °C, less than or equal to 500 °C, less than or equal to 450 °C, less than or equal to 400 °C, or even less than or equal to 350 °C. For example, the nanoparticles may have a sintering compaction temperature greater than or equal to 300 °C and less than or equal to 600 °C, greater than or equal to 350 °C and less than or equal to 600 °C, greater than or equal to 400 °C and less than or equal to 600 °C, greater than or equal to 450 °C and less than or equal to 600 °C, greater than or equal to 500 °C and less than or equal to 600 °C, greater than or equal to 500 °C and less than or equal to 600 °C, greater than or equal to 300 °C and less than or equal to 550 °C, greater than or equal to 300 °C and less than or equal to 500 °C, greater than or equal to 300 °C and less than or equal to 450 °C, greater than or equal to 300 °C and less than or equal to 400 °C, greater than or equal to 300 °C and less than or equal to 350 °C, greater than or equal to 350 °C and less than or equal to 550 °C, or even greater than or equal to 400 °C and less than or equal to 500 °C, or any and all sub-ranges formed from any of these endpoints.

In embodiments, the binder solution comprises greater than or equal to 0.5 wt% and less than or equal to 20 wt% of the nanoparticles, based on a total weight of the binder solution. In embodiments, the amount of nanoparticles in the binder solution may be greater than or equal to 0.5 wt%, greater than or equal to 1 wt%, greater than or equal to 2 wt%, or even greater than or equal to 5 wt%. In embodiments, the amount of nanoparticles in the binder solution may be less than or equal to 20 wt%, less than or equal to 15 wt%, less than or equal to 12 wt%, or even less than or equal to 10 wt%. For example, the amount of nanoparticles in the binder solution may be greater than or equal to 0.5 wt% and less than or equal to 20 wt%, greater than or equal to 0.5 wt% and less than or equal to 17 wt%, greater than or equal to 0.5 wt% and less than or equal to 15 wt%, greater than or equal to 0.5 wt% and less than or equal to 12 wt%, greater than or equal to 0.5 wt% and less than or equal to 10 wt%, greater than or equal to 1 wt% and less than or equal to 20 wt%, greater than or equal to 1 wt% and less than or equal to 17 wt%, greater than or equal to 1 wt% and less than or equal to 15 wt%, greater than or equal to 1 wt% and less than or equal to 12 wt%, greater than or equal to 1 wt% and less than or equal to 10 wt%, greater than or equal to 2 wt% and less than or equal to 20 wt%, greater than or equal to 2 wt% and less than or equal to 17 wt%, greater than or equal to 2 wt% and less than or equal to 15 wt%, greater than or equal to 2 wt% and less than or equal to 12 wt%, greater than or equal to 2 wt% and less than or equal to 10 wt%, greater than or equal to 5 wt% and less than or equal to 20 wt%, greater than or equal to 5 wt% and less than or equal to 17 wt%, greater than or equal to 5 wt% and less than or equal to 15 wt%, greater than or equal to 5 wt% and less than or equal to 12 wt%, or even greater than or equal to 5 wt% and less than or equal to 10 wt%, or any and all sub-ranges formed from any of these endpoints.

The binder solution further includes at least one binder. The binder imparts strength to the green body part by binding the particulate material and layers thereof together after the curing step in which some or all of the solvent of the binder solution is evaporated. Suitable binders include, but are not limited to, thermoplastic binders, thermoset binders, and non-polymeric binders such as waxes and sugars (e.g., glucose, fructose, derivatives thereof, or a combination thereof).

In embodiments, the binder comprises a thermoplastic binder comprising one or more thermoplastic polymer strands. In embodiments, the thermoplastic binder is selected from a class of thermoplastic polymers that generally decompose into small oligomers, carbon dioxide and water without requiring the presence of oxygen. Accordingly, in embodiments, the thermoplastic binder may be cleanly and readily removed during debinding and sintering to generate a consolidated part that is substantially free of the thermoplastic binder and decomposition products (e.g., char and metal oxides).

In embodiments, the one or more thermoplastic polymer strands includes a first polymer strand. In embodiments, the first polymer strand includes at least a first functional group. Functional groups of the first thermoplastic polymer strand may include, by way of example and not limitation, hydrogen bond donors, hydrogen bond acceptors, negatively charged groups, positively charged groups, or combinations thereof. In embodiments, the first functional group is part of the backbone of the first thermoplastic polymer strand. In embodiments, the first functional group of the first polymer strand may compliment a functional group of a second polymer strand of the thermoplastic binder to facilitate non-covalent coupling of the first and second polymer strands. For example, in embodiments, the first functional group is selected from hydroxyl groups, carboxylate groups, amine, thiol, amide, or other suitable functional groups that enable weak, non-covalent coupling of the first and second polymer strands.

In embodiments, the first polymer strand includes one or more polymers such as, but not limited to, polyvinyl alcohol (PVA), polyacryl amide (PAAm), polyacrylic acid (PAA), polyvinyl pyrrolidone (PVP), polymethyl methacrylate (PMMA), polyvinyl methyl ether-maleic anhydride (PVME-MA), polystyrene (PS), derivatives thereof, and combinations thereof. In embodiments, the first polymer strand has an average molecular weight (Mw or weight average) greater than 7,000 g/mol to 50,000 g/mol. In embodiments, the first polymer strand may have an average molecular weight greater than or equal to 7,000 g/mol and less than or equal to 50,000 g/mol. For example, the first polymer strand may have an average molecular weight greater than or equal to 7,000 g/mol and less than or equal to 50,000 g/mol, greater than or equal to 7,000 g/mol and less than or equal to 30,000 g/mol, greater than or equal to 7,000 g/mol and less than or equal to 25,000 g/mol, greater than or equal to 7,000 g/mol and less than or equal to 23,000 g/mol, greater than or equal to 9,000 g/mol and less than or equal to 50,000 g/mol, greater than or equal to 9,000 g/mol and less than or equal to 30,000 g/mol, greater than or equal to 9,000 g/mol and less than or equal to 25,000 g/mol, greater than or equal to 9,000 g/mol and less than or equal to 23,000 g/mol, greater than or equal to 13,000 g/mol and less than or equal to 50,000 g/mol, greater than or equal to 13,000 g/mol and less than or equal to 30,000 g/mol, greater than or equal to 13,000 g/mol and less than or equal to 25,000 g/mol, greater than or equal to 13,000 g/mol and less than or equal to 23,000 g/mol, greater than or equal to 23,000 and less than or equal to 50,000 g/mol, greater than or equal to 23,000 g/mol and less than or equal to 30,000 g/mol, greater than or equal to 23,000 g/mol and less than or equal to 25,000 g/mol, greater than or equal to 25,000 g/mol and less than or equal to 50,000 g/mol, greater than or equal to 25,000 g/mol and less than or equal to 30,000 g/mol, or even greater than or equal to 30,000 g/mol and less than or equal to 50,000 g/mol, or any and all sub-ranges formed from any of these endpoints.

The first polymer strand is present in the binder solution in an amount greater than or equal to 1 wt % and less than or equal to 15 wt%, greater than or equal to 1 wt% and less than or equal to 10 wt%, greater than or equal to 1 wt% and less than or equal to 7 wt%, greater than or equal to 3 wt% and less than or equal to 15 wt%, greater than or equal to 3 wt% and less than or equal to 10 wt%, greater than or equal to 3 wt% and less than or equal to 7 wt%, greater than or equal to 5 wt% and less than or equal to 15 wt%, greater than or equal to 5 wt% and less than or equal to 10 wt%, or even greater than or equal to 5 wt% and less than or equal to 7 wt%, or any and all sub-ranges formed from any of these endpoints, based on a total weight of the binder solution. In embodiments, the first polymer strand is at least 80% soluble by weight in the solvent at STP.

In embodiments, the one or more thermoplastic polymer strands further includes a second polymer strand. In embodiments, the second polymer strand includes at least a second functional group different from the first functional group of the first polymer strand. Functional groups of the second thermoplastic polymer strand may include, by way of example and not limitation, hydrogen bond donors, hydrogen bond acceptors, negatively charged groups, positively charged groups, or combinations thereof. In embodiments, the second functional group is part of the backbone of the second thermoplastic polymer strand. In embodiments, the second functional group of the second polymer strand complements the first functional group of the first polymer strand of the thermoplastic binder to facilitate non-covalent coupling of the first and second polymer strands. For example, in embodiments, the second functional group may be selected from hydroxyl groups, carboxylate groups, amine, thiol, amide, or other suitable functional groups that enable weak, non-covalent coupling of the first and second polymer strands.

In embodiments, the second polymer strand includes one or more polymers such as, but not limited to, polyacrylic acid (PAA), poly methacrylic acid (PmAA), polyacrylamide (PAAm), derivatives thereof, and combinations thereof. In embodiments, the second polymer strand has an average molecular weight (Mw or weight average) greater than or equal to 100 g/mol and less than or equal to 10,000 g/mol. For example, the second polymer strand may have an average molecular weight greater than or equal to 100 g/mol and less than or equal to 10,000 g/mol, greater than or equal to 100 g/mol and less than or equal to 5,000 g/mol, greater than or equal to 500 g/mol and less than or equal to 10,000 g/mol, or even greater than or equal to 500 g/mol and less than or equal to 5,000 g/mol, or any and all sub-ranges formed from any of these endpoints.

The second polymer strand is present in the binder solution in an amount of greater than or equal to 1 wt% and less than or equal to 10 wt%, greater than or equal to 1 wt% and less than or equal to 9 wt%, greater than or equal to 1 wt% and less than or equal to 8 wt%, greater than or equal to 1 wt% and less than or equal to 7 wt%, greater than or equal to 1 wt% and less than or equal to 6 wt%, or even greater than or equal to 1 wt% and less than or equal to 5 wt%, or any and all sub-ranges formed from any of these endpoints, based on a total weight of the binder solution. In embodiments, the second polymer strand may be at least 80% soluble by weight in the solvent at STP.

In embodiments, the first polymer strand includes a different polymer than the second polymer strand. In embodiments, the first polymer strand comprises polyvinyl alcohol (PVA) and the second polymer strand comprises polyacrylic acid (PAA).

The first polymer strand and the second polymer strand are included in the binder solution in amounts to enable coupling between the first polymer strand and the second polymer strand such that the green body part has a sufficient green strength to withstand handling during post-printing processes. In embodiments, the weight ratio of the first polymer strand to the second polymer strand greater than or equal to 3:1 and less than or equal to 7:1. For example, the weight ratio of the first polymer strand to the second polymer strand may be 3:1, 4:1, 5:1, 6:1, or 7:1.

In embodiments, the binder solution comprises nickel-based metallic nanoparticles and polymethyl methacrylate (PMMA).

In embodiments, the binder solution comprises silver-based metallic nanoparticles and polymethyl methacrylate (PMMA).

In embodiments, the binder solution comprises nickel-based metallic nanoparticles and polystyrene (PS).

In embodiments, the binder solution comprises silver-based metallic nanoparticles and polystyrene (PS).

Additionally, the binder solution further includes at least one solvent. The solvent may be aqueous or non-aqueous depending on the selected thermoplastic binder and other additives that may be in the binder solution. The solvent may be generally non-reactive (e.g., inert) such that it does not react with the particulate material, the thermoplastic binder, or any other additives that may be in the binder solution. In embodiments, at least a portion of the solvent may readily evaporate during deposition of the binder solution into the layer of particulate material, prior to thermal curing, and facilitate bonding of the particulate material. In embodiments, the solvent may be, by way of example and not limitation, water, 2-methoxy ethanol, butanol, 1-methoxy-2-propanol, 2-butoxy ethanol, ethylene glycol, ethylene glycol butyl ether, diethylene glycol, tetrahydrofuran (THF), methyl ethyl ketone (MEK), or combinations thereof. In embodiments, the solvent is present in the binder solution in an amount greater than or equal to 1 wt% and less than or equal to 75 wt%, greater than or equal to 1 wt% and less than or equal to 50 wt%, greater than or equal to 1 wt % and less than or equal to 25 wt%, greater than or equal to 1 wt% and less than or equal to 10 wt%, greater than or equal to 10 wt% and less than or equal to 75 wt%, greater than or equal to 10 wt% and less than or equal to 50 wt%, greater than or equal to 10 wt% and less than or equal to 25 wt%, greater than or equal to 25 wt% and less than or equal to 75 wt%, greater than or equal to 25 wt% and less than or equal to 50 wt%, or even greater than or equal to 50 wt% and less than or equal to 75 wt%, or any and all sub-ranges formed from any of these endpoints, based on a total weight of the binder solution.

In various embodiments, the viscosity of the binder solution meets print head specifications to ensure jettability of the binder solution. In embodiments, the binder solution has a viscosity greater than or equal to 1 cP and less than or equal to 40 cP, greater than or equal to 1 cP and less than or equal to 35 cP, greater than or equal to 1 cP and less than or equal to 25 cP, greater than or equal to 1 cP and less than or equal to 20 cP, greater than or equal to 2 cP and less than or equal to 40 cP, greater than or equal to 2 cP and less than or equal to 35 cP, greater than or equal to 2 cP and less than or equal to 30 cP, greater than or equal to 2 cP and less than or equal to 25 cP, or even greater than or equal to 2 cP and less than or equal to 20 cP, or any and all sub-ranges formed from any of these endpoints. To achieve such viscosities, in embodiments, a rheology modifier may be included in the binder solution as an optional additive.

Accordingly, in embodiments, the binder solution may optionally include one or more additives that facilitates jettability of the binder solution and deposition of the binder solution into the layer of particulate material by adjusting the viscosity of the binder solution. Optional additives include surfactants, diluents, viscosity modifiers, dispersants, stabilizers, or any other additive. In embodiments, the surfactants may be ionic (e.g., zwitterionic, cationic, anion) or non-ionic depending on the properties of the thermoplastic binder and/or the particulate material. In embodiments, the surfactant may comprise polypropoxy quaternary ammonium chloride (e.g., VARIQUAT™ CC 42 NS available from Evonik Industries), oligomers of hexanoic acid, alkylene oxide copolymer (e.g., HYPERMER™ KD2 available from Croda Advanced Materials), alkylene esters of fatty acids and alkylamines, 2-[4-(2,4,4-trimethylpentan-2-yl)phenoxy]ethanol (e.g., TRITON™ X-100 available from The Dow Chemical Company), polyoxyethylene (80) sorbitan monooleate (e.g., TWEENTM 80 available from Croda Americas, Inc.), polyoxyethylene-23-lauryl ether (e.g., BRIJTM L23 available from Croda Americas, Inc.), sodium dodecyl sulfate (SDS), hexadecyltrimethylammonium bromide (CTAB), dodecyltrimethylammonium bromide (DTAB), or a combination thereof.

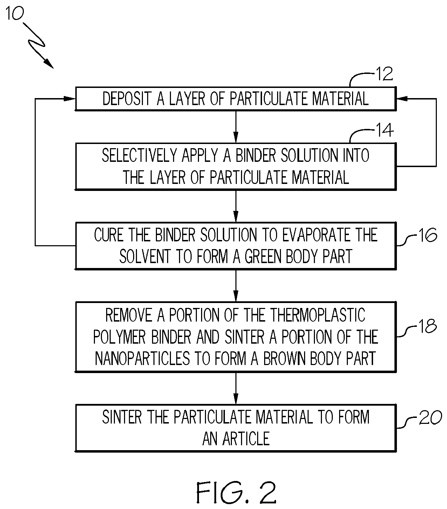

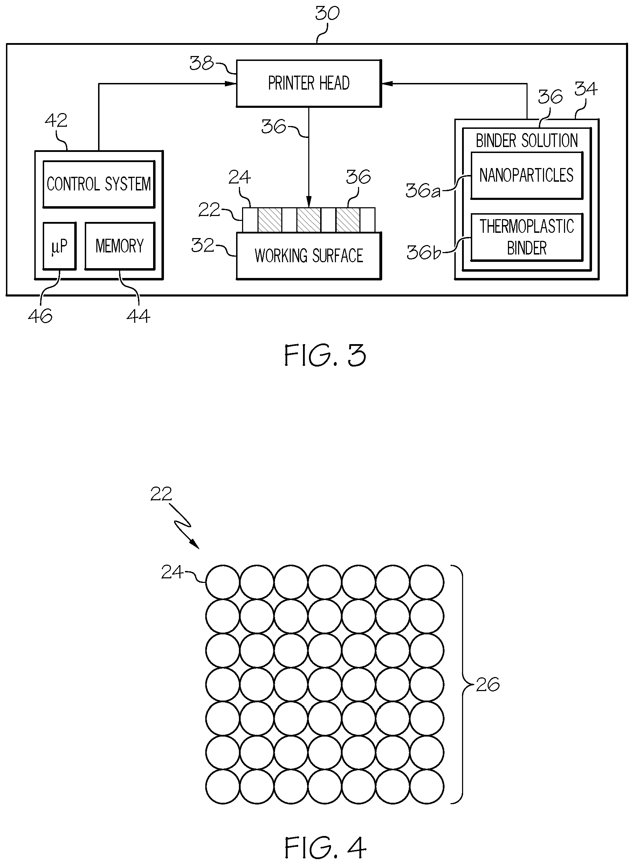

Referring now to FIG. 2, a method of manufacturing a consolidated part via additive manufacturing using the binder solution according to embodiments described herein is shown at 10. To facilitate discussion of aspects of the method 10, reference is also made to FIG. 3, which is a block diagram depicting an embodiment of an additive manufacturing apparatus 30 that may be used to perform the method 10. The method 10 begins at block 12 with depositing a layer 22 of a particulate material 24 (e.g., creating a powder bed), as shown in FIG. 4, on a working surface. In embodiments, the layer 22 may have a thickness 26 greater than or equal to 10 microns (µm) and less than or equal to 200 µm. The particulate material 24 used to print the part may vary depending on the type of part and the end use of the part.

In particular, the particulate material 24 may include a metal particulate material, such as a nickel alloy (e.g., Inconel 625, Inconel 718, Rene'108, Rene'80, Rene'142, Rene'195, and Rene'M2, Marm-247), a cobalt alloy (e.g., Hans 188, L605, X40, X45, and FSX414), a cobalt-chromium alloy, a titanium alloy, an aluminum-based alloy, a tungsten alloy, a stainless steel alloy, or a combination thereof. In embodiments, the metal particulate material may comprise particles having a particle size distribution greater than or equal to 1 microns (µm) and less than or equal to 75 µm. Such particulate materials may be used to print metal articles including, by way of example and not limitation, fuel tips, fuel nozzles, shrouds, micro mixers, or turbine blades.

In embodiments, the particulate material 24 may include a ceramic particulate material, such as alumina, aluminum nitride, zirconia, titania, silica, silicon nitride, silicon carbide, boron nitride, or a combination thereof. In embodiments, the ceramic particulate material may comprise particles having a particle size distribution greater than or equal to 0.1 µm to less than and equal to 100 µm. Such particulate materials may be used to print ceramic articles for use in, by way of example and not limitation, the medical and transportation industries.

Referring back to FIG. 2 at block 14, following the deposition of particulate material 24, the method 10 continues with selectively depositing a binder solution into a portion of the layer 22 according to a pattern. For example, the binder solution may be selectively printed into the layer 22 of particulate material 24 using a print head that is operated by a controller based on a CAD design that includes a representation of a layer of the consolidated part being printed.

For example, as shown in FIG. 3, the additive manufacturing apparatus 30 may be a binder jet printer that selectively deposits the binder solution into the layer 22 according to the acts of block 14 (FIG. 2). In embodiments, the binder jet printer 30 may include a working surface 32 that supports the layer 22 of particulate material 24, a reservoir 34 that stores a binder solution 36, and a printer head 38 that is fluidly coupled to the reservoir 34. The printer head 38 selectively deposits the binder solution 36 into the layer 22 of particulate material 24 to print the binder solution 36 onto and into the layer 22 in a pattern that is representative of a layer of the consolidated part being printed. In embodiments, the binder jet printer 30 may include a control system 42 for controlling operation of the binder jet printer 30. The control system 42 may include a distributed control system (DCS) or any computer-based workstation that is fully or partially automated. In embodiments, the control system 42 may be any suitable device employing a general purpose computer or an application-specific device, which may generally include memory circuitry 44 storing one or more instructions for controlling operation of the binder jet printer 30. The memory circuitry 44 may store CAD designs representative of a structure of the consolidated part being printed. The processor may include one or more processing devices (e.g., microprocessor 46), and the memory circuitry 44 may include one or more tangible, non-transitory, machine-readable media collectively storing instructions executable by the processer to control actions described herein.

The binder solution 36 deposited into the layer of material may be, for example, any one of the embodiments of the binder solution described herein, comprising nanoparticles 36a and a thermoplastic binder 36b. In embodiments, the particular binder solution 36 is selected based at least in part on the particulate material 24 used to form the layer 22. In embodiments, the nanoparticles 36a of the binder solution 36 and the particulate material 24 may comprise one of more of the same elements. For example, in embodiments in which the particulate material 24 comprises a metal particulate material comprising a nickel alloy, a cobalt alloy, a cobalt-chromium alloy, a titanium alloy, an aluminum-based alloy, a tungsten alloy, a stainless steel alloy, or combinations thereof, the nanoparticles 36a may comprise metallic nanoparticles comprising nickel, silver, chromium, aluminum, cobalt, iron, or combinations thereof. In embodiments in which the particulate material 24 is a metal particulate material comprising nickel, the nanoparticles 36a of the binder solution 36 may comprise nickel or a nickel-containing compound. In embodiments in which the particulate material 24 comprises a ceramic particulate material comprising alumina, aluminum nitride, zirconia, titania, silica, silicon nitride, silicon carbide, boron nitride, or combinations thereof, the nanoparticles 36a of the binder solution 36 may comprise alumina, aluminum nitride, zirconia, titania, silica, silicon nitride, silicon carbide, boron nitride, or combinations thereof.

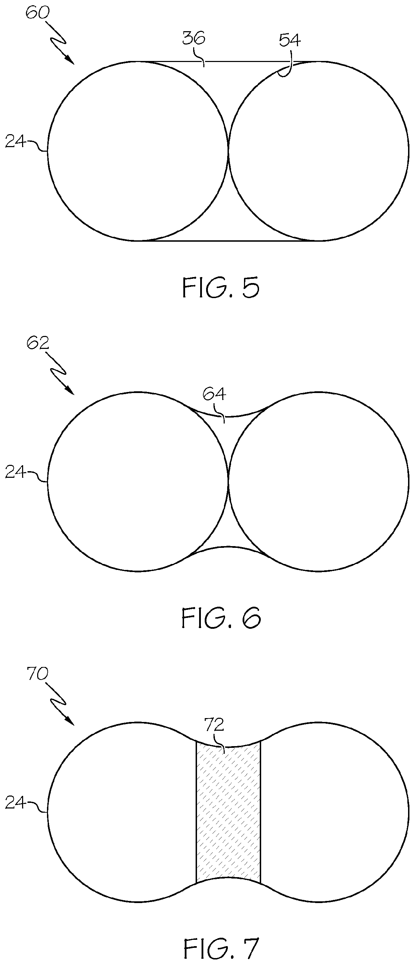

Referring now to FIG. 5, after deposition, the binder solution 36 at least partially coats an outer surface 54 of the particulate material 24, thereby generating binder-coated particles. As discussed herein, upon curing, the thermoplastic binder of the binder solution 36 bonds the particulate material 24 according to the pattern of the binder solution 36 printed into the layer 22 of particulate material 24 to form a layer of the green body part 60.

The method 10 may repeat the acts of blocks 12 and 14 to continue building up the part in a layer-by-layer manner until a desired number of layers 22 have been printed. The thermoplastic binder of the binder solution 36 bonds each successive layer 22 and provides a certain degree of strength (e.g., green strength) to the printed part such that the integrity of the structure of the printed green body part 60 is maintained during post-printing processes (e.g., transferring, inspecting, depowdering). That is, the green strength provided by the thermoplastic binder of the binder solution 36 maintains bonding between the particles of the particulate material 24 within the layers 22 and blocks (e.g., resists, prevents) delamination of the layers 22 during handling and post-printing processing of the green body part 60.

Following deposition of the layer 22 and printing of the binder solution 36 as set forth in blocks 12 and 14 of FIG. 2, the method 10 continues at block 16 with curing the binder solution 36 to form a green body part 60. For example, as discussed hereinabove, the binder solution 36 is a mixture of nanoparticles, a thermoplastic binder, and a solvent. While a portion of the solvent in the binder solution 36 may be evaporated during deposition (e.g., printing) of the binder solution 36, a certain amount of the solvent may remain within the layer 22 of the particulate material 24. Therefore, in embodiments, the binder solution 36 may be thermally cured at a temperature that is suitable for evaporating the solvent remaining in the printed layer 22 and allowing efficient bonding of the printed layers 22, thereby forming the green body part 60. Heat may be applied to the printed part using an IR lamp and/or heated plate (e.g., on-machine), or may be carried out by placing the printed part in an oven (e.g., off-machine). In embodiments, curing the binder solution 36 on-machine comprises heating the printed layers 22 at a temperature greater than or equal to 25 °C and less than or equal to 100 °C, greater than or equal to 30 °C and less than or equal to 90 °C, greater than or equal to 35 °C and less than or equal to 80 °C, or even greater than or equal to 40 °C and less than or equal to 70 °C, or any and all sub-ranges formed from any of these endpoints. In embodiments, temperature ranges for heating the printed layer 22 on-machine may differ from off-machine temperature ranges.

In embodiments, after the part is cured to remove the solvent, the thermoplastic binder present in the green body part 60 bonds the particulate material 24 of the plurality of layers 22. In embodiments, the amount of nanoparticles in the green body part 60 is, based on a total weight of the green body part 60, greater than or equal to 0.5 wt% and less than or equal to 6 wt%, greater than or equal to 0.5 wt% and less than or equal to 5.5 wt%, greater than or equal to 0.5 wt% and less than or equal to 5 wt%, greater than or equal to 1 wt% and less than or equal to 6 wt%, greater than or equal to 1 wt% and less than or equal to 5.5 wt%, greater than or equal to 1 wt% and less than or equal to 5 wt%, greater than or equal to 1.5 wt% and less than or equal to 6 wt%, greater than or equal to 1.5 wt% and less than or equal to 5.5 wt%, greater than or equal to 1.5 wt% and less than or equal to 5 wt%, greater than or equal to 2 wt% and less than or equal to 6 wt%, greater than or equal to 2 wt% and less than or equal to 5.5 wt%, or even greater than or equal to 2 wt% and less than or equal to 5 wt%, or any and all sub-ranges formed from any of these endpoints. In embodiments, the amount of thermoplastic binder in the green body part 60 is, based on a total weight of the green body part 60, greater than or equal to 1 wt% and less than or equal to 20 wt%, greater than or equal to 1 wt% and less than or equal to 18 wt%, greater than or equal to 1 wt% and less than or equal to 15 wt%, greater than or equal to 1 wt% and less than or equal to 12 wt%, greater than or equal to 1 wt% and less than or equal to 10 wt%, greater than or equal to 5 wt% and less than or equal to 20 wt%, greater than or equal to 5 wt% and less than or equal to 18 wt%, greater than or equal to 5 wt% and less than or equal to 15 wt%, greater than or equal to 5 wt% and less than or equal to 12 wt%, greater than or equal to 5 wt% and less than or equal to 10 wt%, greater than or equal to 10 wt% and less than or equal to 20 wt%, greater than or equal to 10 wt% and less than or equal to 18 wt%, greater than or equal to 10 wt% and less than or equal to 15 wt%, or even greater than or equal to 10 wt% and less than or equal to 12 wt%, or any and all sub-ranges formed from any of these endpoints. In embodiments, the particulate material makes up substantially all of the remaining percentage after totaling the amount of nanoparticles and the amount of thermoplastic binder in the green body part 60. In embodiments, to determine the weight percentage of the particulate material, the thermoplastic material, and the nanoparticles in the green body part 60, the particulate material used to form the green body part 60 is weighed. Then, a green body part is printed with the thermoplastic binder and no nanoparticles and weighed. The weight of the particulate material is subtracted from the weight of the printed green body part with the thermoplastic binder to determine the weight of the thermoplastic binder. Then, a green body part 60 is printed with the thermoplastic binder and the nanoparticles and weighed. The weight of the printed green body part with the thermoplastic binder is subtracted from the weight of the printed green body part 60 with the thermoplastic binder and the nanoparticles to determine the weight of the nanoparticles. Weight percentage of each of the components may then be calculated.

Unbound particles from the powder layer (e.g., the particulate material 24 that is not bonded by the binder solution 36) may be removed after curing to prepare the green body part 60 for post-printing steps, such as debinding and sintering.

After curing, the green body part 60 may undergo an optional drying step (not shown) to remove any residual solvent and/or other volatile materials that may remain in the green body part 60. For example, the green body part 60 may be dried in a vacuum, under an inert atmosphere (e.g., nitrogen (N₂), or argon (Ar)) or air at slightly elevated or room temperatures.

In embodiments, the green body part 60 comprises a strength greater than or equal to 7 MPa, greater than or equal to 7.5 MPa, greater than or equal to 8 MPa, greater than or equal to 8.5 MPa, greater than or equal to 9 MPa, greater than or equal to 9.5 MPa, greater than or equal to 10 MPa, greater than or equal to 10.5 MPa, greater than or equal to 11 MPa, greater than or equal to 11.5 MPa, greater than or equal to 12 MPa, greater than or equal to 12.5 MPa, greater than or equal to 13 MPa, greater than or equal to 13.5 MPa, greater than or equal to 14 MPa, greater than or equal to 14.5 MPa, or even greater than or equal to 15 MPa.

Following the curing of the binder solution 36 to form the green body part 60, the method 10 continues at block 18 with heating the green body part 60 above a first temperature to remove at least a portion of the thermoplastic binder (e.g., debinding) to form a brown body part 62. In embodiments, the sintering compaction temperature of the nanoparticles of the binder solution 36 is lower than the sintering temperature of the bulk particulate material 24. As such, during debinding, at least a portion of the nanoparticles of the binder solution 36 decomposes, promoting rapid, surface-based mass transfer between particles, forming interparticle necked regions of a nanoparticulate material 64. For example, as shown in FIG. 6, during the debinding step, the nanoparticles of the binder solution 36 sinter to themselves and form a necked region of the nanoparticulate material 64 between adjacent particles of the particulate material 24. The necked region of nanoparticulate material 64 bridges the particulate material 24, thereby increasing the brown strength of the brown body part 62 after the thermoplastic binder is burned out but prior to consolidation (i.e., sintering) of the particulate material 24. In embodiments, the first temperature is greater than or equal to 75 °C and less than or equal to 700 °C, greater than or equal to 100 °C and less than or equal to 600 °C, greater than or equal to 125 °C and less than or equal to 500 °C, or even greater than or equal to 150 °C and less than or equal to 400 °C, or any and all sub-ranges formed from any of these endpoints.

In embodiments, heating the green body part 60 above a first temperature may include heating the green body part 60 in an oxygen-free environment (e.g., in a vacuum chamber/inert atmosphere). In embodiments, debinding may be performed under nitrogen (N₂), argon (Ar), another inert gas, under vacuum, or combinations thereof. In embodiments, the debinding may be performed in air or in any other environment suitable for the specific materials being processed.

In embodiments, heating the green body part 60 above a first temperature comprises heating the green body part above a first temperature at a first rate greater than or equal to 2 °C /min and less than or equal to 5 °C /min such that at least a portion of the nanoparticles are sintered and at least a portion of the thermoplastic binder is removed. The relatively fast first ramp rate may aid nanoparticle sintering while the thermoplastic binder is still present and aiding green strength. The relatively slower second ramp rate enables thermoplastic binder burnout.

In embodiments, the brown body part 62 may comprise a strength greater than or equal to 1 MPa, greater than or equal to 1.5 MPa, greater than or equal to 2 MPa, greater than or equal to 2.5 MPa, greater than or equal to 3 MPa, greater than or equal to 3.5 MPa, greater than or equal to 4 MPa, greater than or equal to 4.5 MPa, or even greater than or equal to 5 MPa.

The method 10 illustrated in FIG. 2 concludes at block 20 with heating the brown body part 62 above a second temperature to sinter the particulate material 24 thereby forming the consolidated part 70. In embodiments, the second temperature is greater than or equal to the temperature at which the particulate material 24 sinters. As such, by heating the brown body part 62 above a second temperature, the particulate material 24 sinters with the nanoparticulate material 64 (FIG. 6) thereby forming a particulate phase 72, as shown in FIG. 7. In embodiments, the second temperature is greater than or equal to 75 °C and less than or equal to 1500 °C, greater than or equal to 75 °C and less than or equal to 1450 °C, greater than or equal to 75 °C and less than or equal to 1400 °C, greater than or equal to 100 °C and less than or equal to 1500 °C, greater than or equal to 100 °C and less than or equal to 1450 °C, greater than or equal to 100 °C and less than or equal to 1400 °C, greater than or equal to 200 °C and less than or equal to 1500 °C, greater than or equal to 200 °C and less than or equal to 1450 °C, greater than or equal to 200 °C and less than or equal to 1400 °C, greater than or equal to 300 °C and less than or equal to 1500 °C, greater than or equal to 300 °C and less than or equal to 1450 °C, greater than or equal to 300 °C and less than or equal to 1400 °C, greater than or equal to 400 °C and less than or equal to 1500 °C, greater than or equal to 400 °C and less than or equal to 1450 °C, or even greater than or equal to 400 °C and less than or equal to 1400 °C, or any and all sub-ranges formed from any of these endpoints. In embodiments, a nickel alloy, a cobalt alloy, or a stainless steel alloy may decompose at a temperature greater than or equal to 400 °C and less than or equal to 900 °C.

In embodiments, heating the brown body part 62 above a second temperature may include heating the brown body part 62 in an oxygen-free environment (e.g., in a vacuum chamber under inert atmosphere). In metal embodiments, sintering may be performed under nitrogen (N₂), argon (Ar), or another inert gas. In ceramic embodiments, the sintering may be performed in air or in any other environment suitable for the specific materials being processed.

In embodiments, the debinding of block 18 and the sintering of block 20 of method 10 illustrated in FIG. 2 occur in a single step.

Although various embodiments described herein are described with reference to method 10, it should be understood that embodiments of the binder solution described herein can be used with a variety of methods that are known and used by those skilled in the art. In particular, curing and sintering may be accomplished in a number of different ways, in a number of different steps, and in a number of different locations.

### Examples

Embodiments will be further clarified by the following examples. It should be understood that these examples are not limiting to the embodiments described above.

Three comparative and five example binder solutions were prepared for analysis. The formulations of the comparative and example binder solutions are provided in Table 1 (in terms of wt%).

**Table 1:**

| | ***Comp. 1*** | ***Ex. 1*** | ***Ex. 2*** | ***Comp. 2*** | ***Ex. 3*** | ***Ex. 4*** | ***Comp. 3*** | ***Ex. 5*** |
|---|---|---|---|---|---|---|---|---|
| *Polymer* | PMMA | PMMA | PMMA | PS | PS | PS | PVA | PS |
| *MW of polymer* | 120K | 120K | 120K | 280K | 280K | 280K | 50K | 280K |
| *Polymer content (wt%)* | 7 | 7 | 7 | 10 | 10 | 10 | 0 | 7 |
| *Metallic nanoparticle material* | - | Ni | Ag | - | Ni | Ag | - | Ni |
| *Metallic nanoparticle source* | - | Ni-IJ70-30 (30 wt% Ni) | MicroPE® PG-007-AP (60 wt% Ag) | - | Ni-IJ70-30 (30 wt% Ni) | MicroPE® PG-007-AP (60 wt% Ag) | - | Ni-IJ70-30 (30 wt% Ni) |
| *Metallic nanoparticle content (wt%)* | - | 5 | 5 | - | 5 | 5 | - | 10 |

Puck samples were prepared in molds using Ni-1408-9 powder as particulate material and using either Comparative Example 2 or Example 3 listed in Table 1 as a binder solution. The molds were filled with Ni-1408-9 powder and the powder was tapped down to make a level surface. The binder solution was dispensed onto the surface of the powder and allowed to wick completely into the powder. The pucks were cured in a furnace under N₂ atmosphere. The temperature of the furnace was ramped for 2 hours up to 450 °C, maintained for 12 hours, and cooled down for 2 hours to approximately 25 °C.

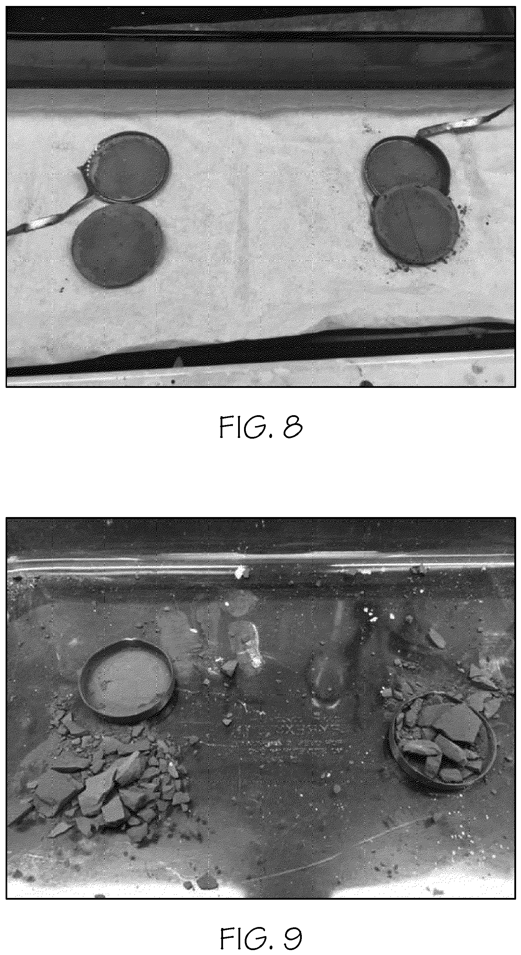

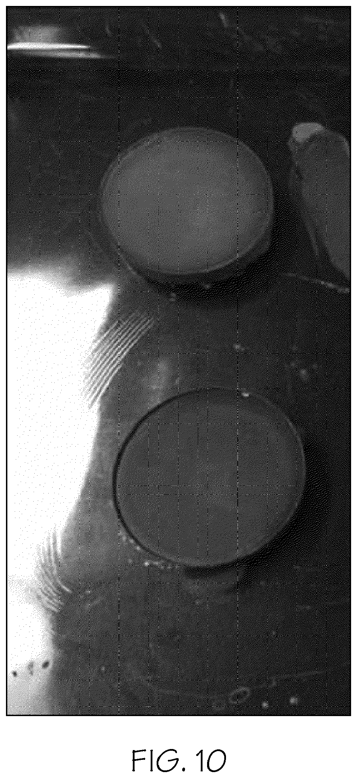

The green body pucks formed after the curing were removed from the furnace, as shown in FIG. 8 (Comparative Example 2) and FIG. 10 (Example 3). The pucks were 1.58 inches in diameter and 0.22 inches in thickness. The pucks formed using Comparative Example 2 had a green strength of 4.2 MPa and the pucks formed using Example 3 had a green strength of 4.6 MPa.

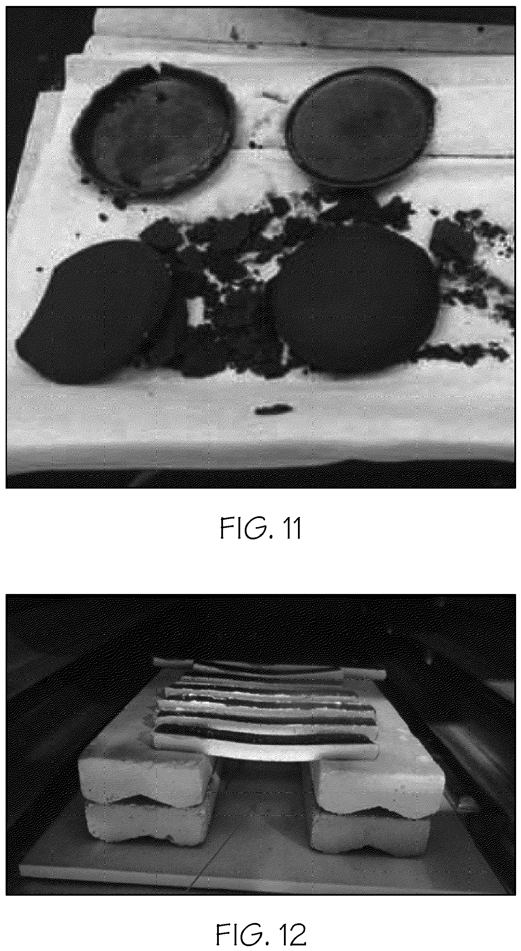

The green body pucks were then heated at 450 °C for 12 hours in an atmosphere of 5% H₂ and 95% N₂ to burn-off the thermoplastic binder. After debinding, the brown body pucks were removed from the molds, as shown in FIG. 9 (Comparative Example 2) and FIG. 11. (Example 3). The brown body pucks formed using Comparative Example 2 either easily crumbled upon removal from the mold or, if tested, had a brown strength of less than 1 MPa. The brown body pucks formed using Example 3 exhibited a brown strength of 3-5 MPa.

While not wishing to be bound by theory, the results suggest that the addition of metallic nanoparticles (i.e., nickel) to the binder solution helped to improve the green strength and brown strength of the pucks.

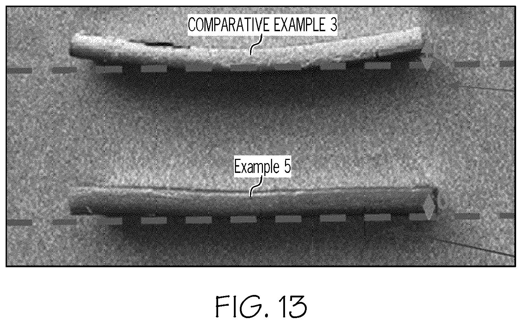

Samples using Comparative Example 3 and Example 5 were prepared and positioned to span across two setter blocks, as shown in FIG. 12. The samples were formed by filling rectangular shaped silicone molds with a fugitive metal precursor powder and adding the thermoplastic binder (e.g., via a dropper) to make a wet block. The silicone molds were placed in a conventional oven and cured at 150 °C for 1 hour. After cooling down, the sample blocks were ejected out of the molds. The samples were placed in a sintering furnace and sintered with a standard sintering profile with a peak sintering temperature of 1300 °C for a period of 30 minutes. As shown in FIG. 13, the samples formed using Example 5 showed less sagging (0.05 inches) than the samples formed using Comparative Example 3 (0.23 inches). While not wishing to be bound by theory, it is believed that the reduced sagging of the samples formed using the binder solution of Example 5 as compared to the samples formed using the binder solution of Comparative Example 3 may be attributed to the presence of the metallic nanoparticles (e.g., Ni nanoparticles) in the binder solution of Example 5.

Elemental analysis (LECO instruments: CS844 C/S analyzer and ONH836 Oxygen/Nitrogen/Hydrogen Elemental Analyzer) was performed on each of the sintered samples. The results of the elemental analysis are provided in Table 2.

**Table 2:**

| | ***Comp. Ex. 3*** | ***Comp. Ex. 3*** | ***Ex. 5*** |
|---|---|---|---|
| Process conditions | H₂ debind/vacuum sinter | vacuum debind/vacuum sinter | vacuum debind/vacuum sinter |
| Average of Carbon (wt%) | 0.092 | 0.0081 | 0.0656 |
| StdDev of Carbon (wt%) | 0.003 | 0.008 | 0.0034 |
| Average of Oxygen (wt%) | 0.037 | 0.028 | 0.027 |
| StdDev of Oxygen (wt%) | 0.001 | 0.006 | 0.002 |

As shown in Table 2, the samples formed using Example 5 has similar oxygen and carbon contents after sintering as the samples formed from Comparative Example 3 after sintering. While not wishing to be bound by theory, this suggests that the addition of the nickel nanoparticles to the binder solution did not have any negative effect (e.g., charring).

Further aspects of the invention are provided by the subject matter of the following clauses:
1. A binder solution comprising: greater than or equal to 0.5 wt% and less than or equal to 20 wt% of nanoparticles, based on a total weight of the binder solution; a thermoplastic binder comprising a first polymer strand, wherein the first polymer strand has an average molecular weight greater than or equal to 7,000 g/mol and less than or equal to 50,000 g/mol; and a solvent.
2. The binder solution of any preceding clause, wherein the binder solution comprises greater than or equal to 1 wt% and less than or equal to 10 wt% of the nanoparticles, based on a total weight of the binder solution.
3. The binder solution of any preceding clause, wherein the nanoparticles comprise metallic nanoparticles.
4. The binder solution of any preceding clause, wherein the metallic nanoparticles comprise nickel, silver, chromium, aluminum, cobalt, iron, or a combination thereof.
5. The binder solution of any preceding clause, wherein the nanoparticles comprise ceramic nanoparticles.
6. The binder solution of any preceding clause, wherein the ceramic nanoparticles comprise alumina, aluminum nitride, zirconia, titania, silica, silicon nitride, silicon carbide, boron nitride, or a combination thereof.
7. The binder solution of any preceding clause, wherein the first polymer strand is selected from the group consisting of polyvinyl alcohol (PVA), polyacryl amide (PAAm), polyacrylic acid (PAA), polyvinyl pyrrolidone (PVP), polymethyl methacrylate (PMMA), polyvinyl methyl ether-maleic anhydride (PVME-MA), polystyrene (PS), derivatives thereof, and combinations thereof.
8. The binder solution of any preceding clause, wherein the thermoplastic binder further comprises a second polymer strand, wherein the first polymer strand comprises a first functional group and the second polymer strand comprises a second functional group different from the first functional group, wherein the first and second functional groups are configured to non-covalently couple the first polymer strand with the second polymer strand, and wherein the second polymer strand has an average molecular weight greater than or equal to 100 g/mol and less than or equal to 10,000 g/mol.
9. The binder solution of any preceding clause, wherein the second polymer strand is selected from the group consisting of polyacrylic acid (PAA), poly methacrylic acid (PmAA), polyacrylamide (PAAm), derivatives thereof, and combinations thereof.
10. The binder solution of any preceding clause, wherein a viscosity of the binder solution is greater than or equal to 1 cP and less than or equal to 40 cP.
11. A method of manufacturing a part, the method comprising: depositing a layer of particulate material on a working surface; selectively applying a binder solution into the layer of particulate material in a pattern representative of a layer of the part, the binder solution comprising: greater than or equal to 0.5 wt% and less than or equal to 20 wt% of nanoparticles, based on a total weight of the binder solution; a thermoplastic binder comprising a first polymer strand, wherein the first polymer strand has an average molecular weight greater than or equal to 7,000 g/mol and less than or equal to 50,000 g/mol; and a solvent; repeating the steps of depositing and selectively applying to form a plurality of layers of particulate material with the applied binder solution; and curing the applied binder solution in the plurality of layers of particulate material with the applied binder solution to evaporate the solvent and thereby form a green body part.
12. The method of any preceding clause, wherein curing the applied binder solution comprises heating the plurality of layers of particulate material with the applied binder solution at a temperature greater than or equal to 25 °C and less than or equal to 100 °C.
13. The method of any preceding clause, wherein the nanoparticles comprise metallic nanoparticles, the metallic nanoparticles comprising nickel, silver, chromium, aluminum, cobalt, iron, or a combination thereof, and wherein the particulate material comprises a metal particulate material, the metal particulate material comprising a nickel alloy, a cobalt alloy, a cobalt-chromium alloy, a titanium alloy, an aluminum-based alloy, a tungsten alloy, a stainless steel alloy, or a combination thereof.
14. The method of any preceding clause, wherein the method further comprises: heating the green body part above a first temperature in an oxygen-free environment to remove at least a portion of the thermoplastic binder and sinter at least a portion of the metallic nanoparticles such that the sintered metallic nanoparticles form necked regions of a nanoparticulate material between the particulate material thereby forming a brown body part; and heating the brown body part above a second temperature to sinter the particulate material thereby forming a consolidated part.
15. The method of any preceding clause, wherein the nanoparticles comprise ceramic nanoparticles, the ceramic nanoparticles comprising alumina, aluminum nitride, zirconia, titania, silica, silicon nitride, silicon carbide, boron nitride, or a combination thereof, and wherein the particulate material comprises a ceramic particulate material, the ceramic particulate material comprising alumina, aluminum nitride, zirconia, titania, silica, silicon nitride, silicon carbide, boron nitride, or a combination thereof.
16. The method of any preceding clause, wherein a viscosity of the binder solution is greater than or equal to 1 cP and less than or equal to 40 cP.
17. A green body part comprises: a plurality of layers of particulate material; greater than or equal to 0.5 wt% and less than or equal to 6 wt% of nanoparticles; and greater than or equal to 1 wt% and less than or equal to 20 wt% a thermoplastic binder comprising a first polymer strand, wherein the first polymer strand has an average molecular weight greater than or equal to 7,000 g/mol and less than or equal to 50,000 g/mol, wherein the thermoplastic binder bonds the particulate material of the plurality of layers, and wherein the green body part comprises a three-point flexural strength greater than or equal to 7 MPa as measured in accordance with ASTM B312-14.
18. A green body part of any preceding clause, wherein the nanoparticles comprise metallic nanoparticles, the metallic nanoparticles comprising nickel, silver, chromium, aluminum, cobalt, iron, or a combination thereof, and wherein the particulate material comprises a metal particulate material, the metal particulate material comprising a nickel alloy, a cobalt alloy, a cobalt-chromium alloy, a titanium alloy, an aluminum-based alloy, a tungsten alloy, a stainless steel alloy, or a combination thereof.
19. A green body part of any preceding clause, wherein the nanoparticles comprise ceramic nanoparticles, the ceramic nanoparticles comprising alumina, aluminum nitride, zirconia, titania, silica, silicon nitride, silicon carbide, boron nitride, or a combination thereof, and wherein the particulate material comprises a ceramic particulate material, the ceramic particulate material comprising alumina, aluminum nitride, zirconia, titania, silica, silicon nitride, silicon carbide, boron nitride, or a combination thereof.
20. A green body part of any preceding clause, wherein the first polymer strand is selected from the group consisting of polyvinyl alcohol (PVA), polyacryl amide (PAAm), polyacrylic acid (PAA), polyvinyl pyrrolidone (PVP), polymethyl methacrylate (PMMA), polyvinyl methyl ether-maleic anhydride (PVME-MA), polystyrene (PS), derivative thereof, and combinations thereof.

The above embodiments, and the features of those embodiments, are exemplary and can be provided alone or in any combination with any one or more features of other embodiments provided herein without departing from the scope of the disclosure.

It will be apparent to those skilled in the art that various modifications and variations can be made to the present disclosure without departing from the spirit and scope of the disclosure. Thus, it is intended that the present disclosure cover the modifications and variations of this disclosure provided they come within the scope of the appended claims and their equivalents.

## Claims

1. A binder solution (36) comprising:
greater than or equal to 0.5 wt% and less than or equal to 20 wt% of nanoparticles (36a), based on a total weight of the binder solution (36);
a thermoplastic binder (36b) comprising a first polymer strand, wherein the first polymer strand has an average molecular weight greater than or equal to 7,000 g/mol and less than or equal to 50,000 g/mol; and
a solvent.

2. The binder solution (36) of claim 1, wherein the binder solution (36) comprises greater than or equal to 1 wt% and less than or equal to 10 wt% of the nanoparticles (36a), based on a total weight of the binder solution (36).

3. The binder solution (36) of claim 1 or claim 2, wherein the nanoparticles (36a) comprise metallic nanoparticles, the metallic nanoparticles comprising nickel, silver, chromium, aluminum, cobalt, iron, or a combination thereof.

4. The binder solution (36) of claim 1 or claim 2, wherein the nanoparticles (36a) comprise ceramic nanoparticles, the ceramic nanoparticles comprising alumina, aluminum nitride, zirconia, titania, silica, silicon nitride, silicon carbide, boron nitride, or a combination thereof.

5. The binder solution (36) of any one of claims 1-4, wherein the first polymer strand is selected from the group consisting of polyvinyl alcohol (PVA), polyacryl amide (PAAm), polyacrylic acid (PAA), polyvinyl pyrrolidone (PVP), polymethyl methacrylate (PMMA), polyvinyl methyl ether-maleic anhydride (PVME-MA), polystyrene (PS), derivatives thereof, and combinations thereof.

6. The binder solution (36) of any one of claims 1-5, wherein the thermoplastic binder further comprises a second polymer strand, wherein the first polymer strand comprises a first functional group and the second polymer strand comprises a second functional group different from the first functional group, wherein the first and second functional groups are configured to non-covalently couple the first polymer strand with the second polymer strand, wherein the second polymer strand has an average molecular weight greater than or equal to 100 g/mol and less than or equal to 10,000 g/mol, and wherein the second polymer strand is selected from the group consisting of polyacrylic acid (PAA), poly methacrylic acid (PmAA), polyacrylamide (PAAm), derivatives thereof, and combinations thereof.

7. The binder solution (36) of any one of claims 1-6, wherein a viscosity of the binder solution (36) is greater than or equal to 1 cP and less than or equal to 40 cP.

8. A method (10) of manufacturing a part of a part, the method (10) comprising:
depositing a layer (22) of particulate material (24) on a working surface (32);
selectively applying a binder solution (36) into the layer (22) of particulate material (24) in a pattern representative of a layer of the part, the binder solution (36) comprising:
greater than or equal to 0.5 wt% and less than or equal to 20 wt% of nanoparticles (36a), based on a total weight of the binder solution (36);
a thermoplastic binder (36b) comprising a first polymer strand, wherein the first polymer strand has an average molecular weight greater than or equal to 7,000 g/mol and less than or equal to 50,000 g/mol; and
a solvent;
repeating the steps of depositing and selectively applying to form a plurality of layers (22) of particulate material (24) with the applied binder solution (36); and
curing the applied binder solution (36) in the plurality of layers (22) of particulate material (24) with the applied binder solution (36) to evaporate the solvent and thereby form a green body part (60).

9. The method (10) of claim 8, wherein the nanoparticles (36a) comprise metallic nanoparticles, the metallic nanoparticles comprising nickel, silver, chromium, aluminum, cobalt, iron, or a combination thereof, and wherein the particulate material comprises a metal particulate material, the metal particulate material comprising a nickel alloy, a cobalt alloy, a cobalt-chromium alloy, a titanium alloy, an aluminum-based alloy, a tungsten alloy, a stainless steel alloy, or a combination thereof.

10. The method (10) of claim 9, wherein the method (10) further comprises:
heating the green body part (60) above a first temperature in an oxygen-free environment to remove at least a portion of the thermoplastic binder (36) and sinter at least a portion of the metallic nanoparticles (36a) such that the sintered metallic nanoparticles (36a) form necked regions of a nanoparticulate material (64) between the particulate material (24) thereby forming a brown body part (62); and
heating the brown body part (62) above a second temperature to sinter the particulate material (24) thereby forming a consolidated part (70).

11. The method (10) of claim 8, wherein the nanoparticles (36a) comprise ceramic nanoparticles, the ceramic nanoparticles comprising alumina, aluminum nitride, zirconia, titania, silica, silicon nitride, silicon carbide, boron nitride, or a combination thereof, and wherein the particulate material comprises a ceramic particulate material, the ceramic particulate material comprising alumina, aluminum nitride, zirconia, titania, silica, silicon nitride, silicon carbide, boron nitride, or a combination thereof.

12. The method (10) of any one of claims 8-11, wherein a viscosity of the binder solution (36) is greater than or equal to 1 cP and less than or equal to 40 cP.

13. A green body part (60) comprising:
a plurality of layers (22) of particulate material (24);
greater than or equal to 0.5 wt% and less than or equal to 6 wt% of nanoparticles (36a); and
greater than or equal to 1 wt% and less than or equal to 20 wt% a thermoplastic binder (36) comprising a first polymer strand, wherein the first polymer strand has an average molecular weight greater than or equal to 7,000 g/mol and less than or equal to 50,000 g/mol,
wherein the thermoplastic binder (36) bonds the particulate material (24) of the plurality of layers (22), and
wherein the green body part (60) comprises a three-point flexural strength greater than or equal to 7 MPa as measured in accordance with ASTM B312-14.

14. The green body part (60) of claim 13, wherein the nanoparticles (36a) comprise metallic nanoparticles, the metallic nanoparticles comprising nickel, silver, chromium, aluminum, cobalt, iron, or a combination thereof, and wherein the particulate material comprises a metal particulate material, the metal particulate material comprising a nickel alloy, a cobalt alloy, a cobalt-chromium alloy, a titanium alloy, an aluminum-based alloy, a tungsten alloy, a stainless steel alloy, or a combination thereof.

15. The green body part (60) of claim 13, wherein the nanoparticles (36a) comprise ceramic nanoparticles, the ceramic nanoparticles comprising alumina, aluminum nitride, zirconia, titania, silica, silicon nitride, silicon carbide, boron nitride, or a combination thereof, and wherein the particulate material comprises a ceramic particulate material, the ceramic particulate material comprising alumina, aluminum nitride, zirconia, titania, silica, silicon nitride, silicon carbide, boron nitride, or a combination thereof.
